# EUROPEAN PATENT APPLICATION

(11) **EP 2 605 252 A1**
(43) Date of publication of application: **19.06.2013**
(21) Application number: 11193687.8
(22) Date of filing: 15.12.2011
(51) Int. Cl.: H01C 3/02, H01C 3/16, H02K 19/36, H02K 11/00

(54) **Starting resistor with a coil wound in opposite directions**

(71) Applicant: ABB Technology Ltd, 8050 Zürich (CH)
(72) Inventor: Liu, Yujing, 722 10 Västerås (SE); Savinovic, Djordje, 723 37 Västerås (SE); Berggren, Patrik, 722 17 Västerås (SE)
(74) Representative: Savela, Reino Aleksi

(57) **Abstract**

A starting resistor for a synchronous electrical machine comprises a conductor (110) wound about a central axis (120) in a plurality of radial layers (130) to constitute a resistor coil (100). At least two adjacent radial layers (130) are wound in opposite directions in order to cancel out the magnetic fields caused by the current in the individual radial layers (130).

## Description

### TECHNICAL FIELD

The present invention relates to starting resistors for synchronous electrical machines including a rotor with a field coil.

### BACKGROUND ART

In a synchronous electrical machine, a starting resistor is a device that limits the field winding current during start-up in order to increase the starting torque. In a brushless motor the starting resistor rotates together with the rotor, and it is connected in series with the field coils during start-up and eventually during other situations where the machine is running out of synchronization. During steady state operation of the machine the starting resistor is disconnected. A starting resistor has a large and heavy resistor coil wound about a rotating axis of the machine. The large physical dimensions and mass follow from the requirement of being able to absorb high amounts of energy during the start-up. For a 20 MW machine the starting resistor may absorb about 1 MW for about 10-20 seconds, and this electrical energy is converted into thermal energy within the starting resistor. Most of this energy goes to raising the temperature of the starting resistor because the time is too short for transferring away the heat.

A starting resistor for large machines in the order of 20 MW can be dimensioned such that a voltage difference across it becomes as high as 2 kV. A thick insulation between individual turns of the resistor coil is required especially if conductor turns close to the opposite ends of the coil are adjacent to each other. This is the case with the starting resistor according to EP1071192, schematically illustrated in figure 1. A bifilar resistor coil 10 has a double-wound wire 20 with the individual conductors 30, 40 constituting terminals E₁, E₂ at one end of the resistor coil 10, and being short circuited with a shorting bridge 50 at the opposite end of the resistor coil 10. At the terminals E₁, E₂ the voltage difference between the individual conductors 30, 40 corresponds to the voltage difference across the whole resistor coil 10. There must therefore be a relatively thick insulation provided between the conductors 30, 40. While the starting resistor of EP1071192 achieves a desirable property of low self-inductance (i.e. net magnetic field close to zero) of the resistor coil 10 with simple manufacturing means, it would also be desirable to avoid the relatively thick insulation required between the conductors 30, 40.

An alternative solution for achieving a starting resistor with low self-inductance is disclosed in US4319216. According to this solution two single-wound resistor coils are provided with the coils wound in opposite directions. The two resistor coils are arranged close to each other in an axial direction, and the magnetic fields of the individual resistor coils are supposed to cancel out each other. One drawback of the starting resistor of US4319216 is that two divergent resistor coils are required, and another is that the opposite magnetic fields are not effectively cancelled due to the axial distance between the two resistor coils. Furthermore, US4319216 establishes that inductance can be cancelled with a strip-like resistor member which is wound edgewise and folded back at each turn, but that such structure is difficult to manufacture.

There is therefore a desire to develop an improved starting resistor which addresses the drawbacks of the existing starting resistors.

### SUMMARY OF THE INVENTION

One object of the invention is to provide an improved starting resistor with low self-inductance and with easy manufacturing, which starting resistor has reduced requirements for the insulation of the resistor coil conductor.

A further object of the invention is to provide a manufacturing method for an improved starting resistor.

These objects are achieved by the device according to appended claim 1 and the method according to appended claim 11.

According to a first aspect of the invention there is provided a starting resistor for a synchronous electrical machine. The starting resistor comprises a conductor wound about a central axis in a plurality of radial layers to constitute a resistor coil. At least two adjacent radial layers are wound in opposite directions.

The magnetic fields caused by the current in the individual turns of the conductor are cancelled out effectively when the opposite currents occur in conductor turns which are arranged concentrically in adjacent radial layers. When the radial layers are wound in opposite directions (instead of e.g. double-wounding in a single direction), the voltage differences between adjacent conductors within the resistor coil remain relatively low. It is also relatively easy from the manufacturing point of view to reverse the turning direction between adjacent radial layers (compared to reversing the turning direction between adjacent conductor turns in the direction of the central axis).

According to one embodiment of the invention each radial layer consists of a single turn of the conductor. The manufacturing is simplified when the wounding step has only a radial dimension.

According to one embodiment of the invention each radial layer consists of a plurality of adjacent turns of the conductor. The power of the resistor coil is increased by simple means, and fewer reversals of the turning direction are required, when the number of adjacent conductor turns per radial layer is increased.

According to one embodiment of the invention each radial layer consists of a plurality of turns of the conductor arranged adjacent to each other in the direction of the central axis. By this measure the power of the resistor coil is increased by simple means without increasing the radial dimension of the resistor coil.

According to one embodiment of the invention the starting resistor comprises a plurality of conductors constituting a plurality of resistor coils. The plurality of resistor coils is arranged adjacent to each other in the direction of the central axis. By this measure the starting resistor becomes modular, and the power of the same is defined in a simple way by choosing an appropriate number of resistor coil modules.

According to one embodiment of the invention a turning direction of each conductor changes once. From the manufacturing point of view a single reversal of the turning direction is the most preferable solution.

According to one embodiment of the invention a turning direction of each conductor changes several times. If the resistor coil has a large radial dimension it may be preferable to change the turning direction of the conductor several times in order to more effectively cancel the magnetic fields caused by the radial layers turned in opposite directions.

According to one embodiment of the invention the turning direction of each conductor changes between each pair of adjacent radial layers. This is the most preferable solution from the point of view of cancelling the magnetic fields as effectively as possible.

According to one embodiment of the invention the starting resistor is configured to absorb an energy of at least 0,1 MJ, such as 1 MJ or 10 MJ, in 10 seconds. The starting resistor needs to have a certain robust size in order to be able to fulfil its function in large machines where it is normally used.

According to one embodiment of the invention a synchronous electrical machine comprises a starting resistor according to one of the embodiments described hereinbefore, and the starting resistor is configured to be connected in series with field coils on a rotor.

According to a second aspect of the invention there is provided a method for manufacturing a starting resistor. The method comprises the steps of: winding a conductor about a central axis in a first direction to constitute a first radial layer; and winding the conductor about the central axis over the first radial layer in a second direction to constitute a second radial layer, the second direction being opposite to the first direction.

### BRIEF DESCRIPTION OF THE DRAWINGS

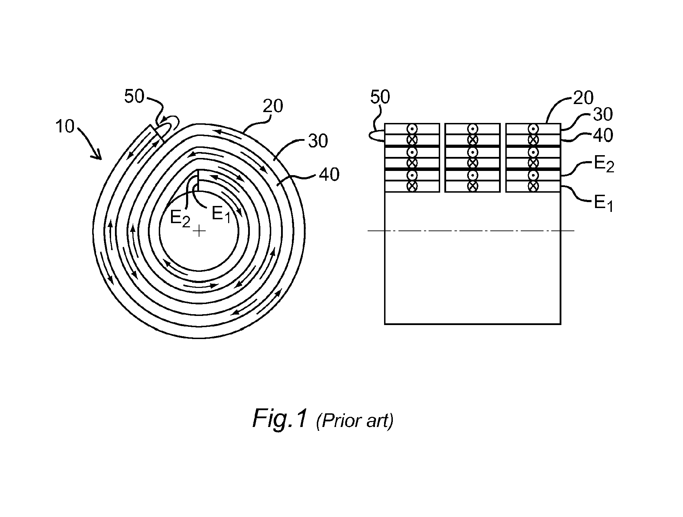

The invention will be explained in greater detail with reference to the accompanying drawings, wherein
- figure 1: shows a schematic illustration of a prior art resistor coil,
- figure 2: shows one embodiment of the invention with radial layers consisting of a single turn of a conductor and with the turning direction reversing after each full turn,
- figure 3: shows one embodiment of the invention with radial layers consisting of two conductor turns adjacent in the direction of the central axis and with the turning direction reversing after each radial layer,
- figure 4: shows one embodiment of the invention with radial layers consisting of two conductor turns adjacent in the radial direction and with the turning direction reversing once, and
- figure 5: shows one embodiment of the invention with radial layers consisting of a plurality of turns of a conductor adjacent both in the radial direction and in the direction of the central axis and with the turning direction reversing once.

### DESCRIPTION OF PREFERRED EMBODIMENTS

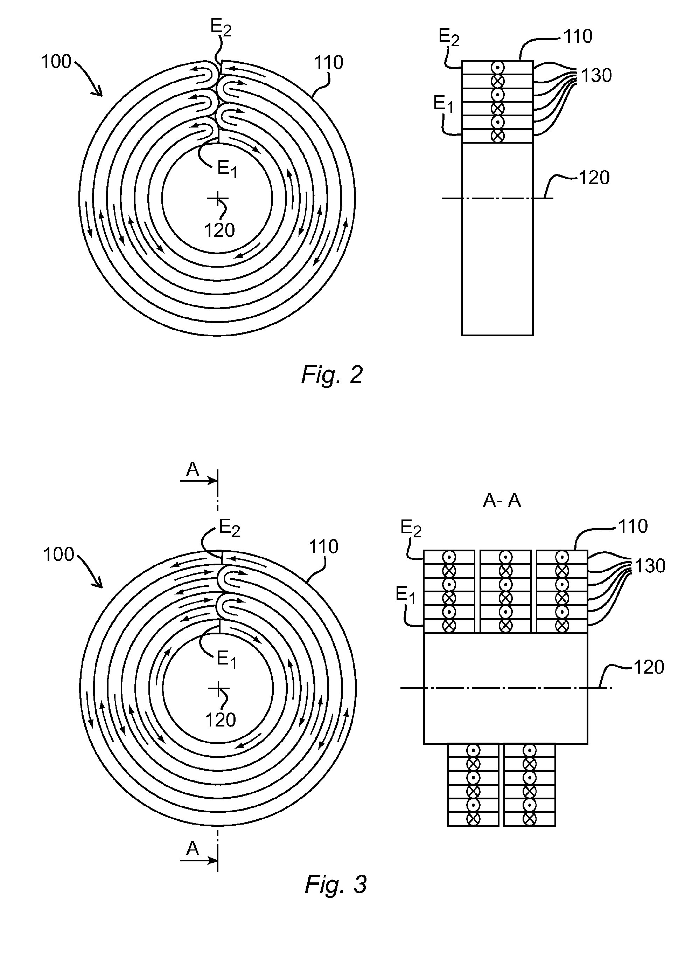

Referring to figure 2, a starting resistor according to one embodiment of the invention comprises a resistor coil 100 with a single-wound conductor 110. The conductor 110 is turned in several turns about a central axis 120, the conductor 110 thereby constituting a plurality of radial layers 130. The turning direction of the conductor 110 is reversed after every full turn. Consequently, the direction of current at each radial layer 130 is opposite to the direction of current at each neighbouring radial layer 130, and the magnetic fields caused by the current in the individual radial layers 130 are effectively cancelled out.

Because the conductor 110 is single-wound, the terminals E₁, E₂ of the resistor coil 100 land at the innermost radial layer 130 and at the outermost radial layer 130, respectively. That is, the terminals E₁, E₂ are far away from each other, and the voltage difference across the whole resistor coil 100 is not relevant when dimensioning an insulation between different turns of the conductor 110. Instead, it suffices that this insulation is able to withstand the voltage difference between two adjacent radial layers 130 of the resistor coil 100, which in the case of the resistor coil 100 in figure 2 corresponds to two full turns of the conductor 110. The voltage difference between two adjacent radial layers 130 of the resistor coil 100 may be significantly less than the voltage difference across the whole resistor coil 100 because a resistor coil 100 may have a great number of radial layers 130, such as 10 to 100 radial layers 130. A relatively thin strand insulation applied directly on the surface of the conductor 110 may therefore be sufficient to withstand the voltage difference between two adjacent radial layers 130.

The radial layers 130 of the resistor coil 100 in figure 2 consist of a single turn of the conductor 110. The cross-section shape of the conductor 110 is rectangular with the width being several times greater than the height. If the size of the starting resistor needs to be increased, this can be done by increasing the number of radial layers 130, by increasing the cross-section area of the conductor 110, or by arranging several resistor coils 100 side by side in the direction of the central axis 120. In the latter case the coils can be connected according to the requirements. The innermost radial layers 130 as well as the outermost radial layers 130 of the individual resistor coils 100 could for example be mutually short-circuited.

Alternatively, and referring to figure 3, the size of the starting resistor can be increased by increasing the number of conductor turns per radial layer 130. Each radial layer 130 of the resistor coil 100 according to figure 3 consists of two turns of the conductor 110 arranged adjacent to each other in the direction of the central axis 120. The turning direction of the conductor 110 is reversed after every radial layer 130. Consequently, the magnetic fields caused by the current in the individual radial layers 130 are cancelled out in a corresponding way as in the case of the resistor coil 100 of figure 2. In the case according to figure 3 the highest voltage difference between two adjacent radial layers 130 corresponds to four full turns of the conductor 110. In practice, each radial layer 130 of the resistor coil 100 may consist of much greater number of conductor turns, such as 10 to 50 turns.

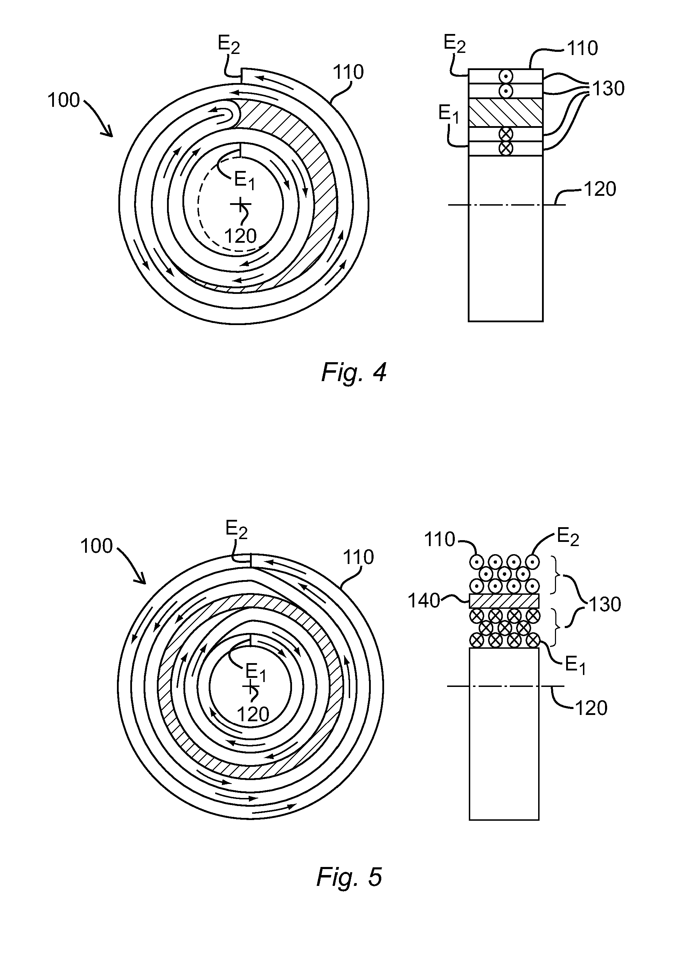

In the previous examples the turning direction of the conductor 110 is reversed after every radial layer 130, each radial layer 130 consisting either of a single turn of the conductor 110 or of turns adjacent in the direction of the central axis 120. This is done in order to effectively cancel out the magnetic fields caused by the current in the individual radial layers 130. However, it is not necessary to reverse the turning direction that often if acceptable cancellation of the magnetic fields is achieved with fewer turning direction changes. According to the embodiment of figure 4 the resistor coil 100 consist of a conductor 110 of which the turning direction is reversed only once. The change of turning direction may be difficult in practice from the manufacturing point of view, and that is why it may be advantageous to choose not to change the turning direction too many times. Instead, every radial layer 130 may consist of several conductor turns adjacent both in the radial direction and in the direction of the central axis 120. It is apparent that any suitable number of turning direction changes may be chosen. While figure 4 shows a resistor coil 100 with a single turn of the conductor 110 in the direction of the central axis 120, it is apparent that the same principle can be analogously applied to resistor coils with several conductor turns in the direction of the central axis 120.

Referring to figure 5, a starting resistor according to one embodiment of the invention comprises a resistor coil 100 with a conductor 110 having a circular cross-section shape. An inner radial layer 130 of the resistor coil 100 consists of a certain number of turns randomly wound about the central axis 120 in a first turning direction. An outer radial layer 130 of the resistor coil 100 consists of a certain number of turns randomly wound about the central axis 120 in a second turning direction which is opposite to the first turning direction. An additional insulation 140 is provided between the two adjacent radial layers 130. A corresponding additional insulation can also been provided between two adjacent radial layers that are wound in a same turning direction if the voltage difference between the adjacent radial layers exceeds the capacity of the strand insulation. A typical resistor coil 100 also comprises a main insulation which takes care of insulating the resistor coil 100 towards the surrounding elements such as the machine shaft. The main insulation is not shown in the figures.

The invention is not limited to the embodiments shown above, but the person skilled in the art may, of course, modify them in a plurality of ways within the scope of the invention as defined by the claims.

## Claims

1. A starting resistor for a synchronous electrical machine, the starting resistor comprising:
a conductor (110) wound about a central axis (120) in a plurality of radial layers (130) to constitute a resistor coil (100),
**characterized in that** at least two adjacent radial layers (130) are wound in opposite directions.

2. A starting resistor according to claim 1, wherein each radial layer (130) consists of a single turn of the conductor (110).

3. A starting resistor according to claim 1, wherein each radial layer (130) consists of a plurality of adjacent turns of the conductor (110).

4. A starting resistor according to claim 3, wherein each radial layer (130) consists of a plurality of turns of the conductor (110) arranged adjacent to each other in the direction of the central axis (120).

5. A starting resistor according to any of the preceding claims comprising a plurality of conductors (110) constituting a plurality of resistor coils (100), the plurality of resistor coils (100) being arranged adjacent to each other in the direction of the central axis (120).

6. A starting resistor according to any of the preceding claims, wherein a turning direction of each conductor (110) changes once.

7. A starting resistor according to any of claims 1-5,
wherein a turning direction of each conductor (110) changes several times.

8. A starting resistor according to claim 7, wherein the turning direction of each conductor (110) changes between each pair of adjacent radial layers (130).

9. A starting resistor according to any of the preceding claims being configured to absorb an energy of at least 0,1 MJ, such as 1 MJ or 10 MJ, in 10 seconds.

10. A synchronous electrical machine comprising a starting resistor according to any of claims 1-9, wherein the starting resistor is configured to be connected in series with field coils on a rotor.

11. A method for manufacturing a starting resistor, the method comprising the steps of:
- winding a conductor (110) about a central axis (120) in a first direction to constitute a first radial layer (130); and
- winding the conductor (110) about the central axis (120) over the first radial layer (130) in a second direction to constitute a second radial layer (130), the second direction being opposite to the first direction.
